# EUROPEAN PATENT APPLICATION

(11) **EP 3 846 112 A2**
(43) Date of publication of application: **07.07.2021**
(21) Application number: 21164526.2
(22) Date of filing: 24.03.2021
(51) Int. Cl.: G06Q 40/08

(54) **BLOCKCHAIN-BASED DATA PROCESSING METHOD AND APPARATUS, DEVICE, AND STORAGE MEDIUM**

(30) Priority: 29.09.2020 CN 202011047044
(71) Applicant: BEIJING BAIDU NETCOM SCIENCE AND TECHNOLOGY CO. LTD., 100085 Beijing (CN)
(72) Inventor: JING, Bo, BEIJING, 100085 (CN)
(74) Representative: Bittner, Bernhard

(57) **Abstract**

A blockchain-based data processing method and apparatus, an electronic device, and a storage medium are provided, which are related to a field of blockchain technology and may be applied to cloud computations and cloud services. The specific implementation includes: acquiring a target chaining transaction request initiated by a target oracle based on a target oracle smart contract; acquiring other chaining transaction requests initiated by at least one other oracle based on the target oracle smart contract; and processing target off-chain data in the target chaining transaction request and other off-chain data in the other chaining transaction requests to obtain to-be-chained data based on the target oracle smart contract, and chaining and storing the to-be-chained data. A decentralized oracle is realized, and an authenticity of the off-chain data stored in the blockchain is ensured, thereby ensuring a reliability of an execution result of the business smart contract in the blockchain.

## Description

### TECHNICAL FIELD

The present application relates to a field of computer technology, in particular to, a blockchain technology, and specifically to a blockchain-based data processing method and apparatus, a device, and a storage medium.

### BACKGROUND

Due to a decentralized nature, a blockchain can perform a self-governance of on-chain data, but an authenticity of off-chain data cannot be confirmed. For business smart contracts such as insurance and gambling, it is necessary to acquire information outside the blockchain (i.e., the off-chain data), such as whether an airplane of a designated flight is delayed, and a competition result of a designated ball match, etc.

However, at present, the off-chain data is generally acquired by an oracle solution, and then synchronized to a blockchain network. But an oracle is centralized, which brings a risk of tampering. In a case that the oracle does evil, a reliability of a processing result of a business smart contract in the blockchain cannot be ensured.

### SUMMARY

The present disclosure provides a blockchain-based data processing method and apparatus, a device, and a storage medium, so that a decentralized oracle may be realized, and an authenticity of off-chain data stored on a blockchain may be ensured, thereby ensuring a reliability of an execution result of a business smart contract in the blockchain.

According to an aspect of the present disclosure, there is provided a blockchain-based data processing method, including:

acquiring a target chaining transaction request initiated by a target oracle based on a target oracle smart contract;

acquiring other chaining transaction requests initiated by at least one other oracle based on the target oracle smart contract; and

processing target off-chain data in the target chaining transaction request and other off-chain data in the other chaining transaction requests to obtain to-be-chained data based on the target oracle smart contract, and chaining and storing the to-be-chained data.

According to another aspect of the present disclosure, there is provided a blockchain-based data processing method, including:
determining a target oracle smart contract from at least two candidate oracle smart contracts according to acquired off-chain data; and
calling the target oracle smart contract to generate a local chaining transaction request including the off-chain data, and sending the local chaining transaction request to a blockchain network to instruct the blockchain network to: process the local chaining transaction request and other chaining transaction requests generated by at least one other oracle to obtain to-be-chained data based on the target oracle smart contract, and chain and store the to-be-chained data.

According to still another aspect of the present disclosure, there is provided a blockchain-based data processing apparatus, including:
a chaining request acquisition module configured to acquire a target chaining transaction request initiated by a target oracle based on a target oracle smart contract;
the chaining request acquisition module is further configured to acquire other chaining transaction requests initiated by at least one other oracle based on the target oracle smart contract;
a chaining request processing module configured to process target off-chain data in the target chaining transaction request and other off-chain data in the other chaining transaction requests to obtain to-be-chained data based on the target oracle smart contract, and chain and store the to-be-chained data.

According to still another aspect of the present disclosure, there is provided a blockchain-based data processing apparatus, including:
a target contract determination module configured to determine a target oracle smart contract from at least two candidate oracle smart contracts according to acquired off-chain data; and
a chaining request sending module configured to call the target oracle smart contract to generate a local chaining transaction request including the off-chain data, and send the local chaining transaction request to a blockchain network to instruct the blockchain network to: process the local chaining transaction request and other chaining transaction requests generated by at least one other oracle to obtain to-be-chained data based on the target oracle smart contract, and chain and store the to-be-chained data.

According to still another aspect of the present disclosure, there is provided an electronic device, including:
at least one processor; and
a memory communicatively connected to the at least one processor, wherein
the memory stores instructions executable by the at least one processor, the instructions are executed by the at least one processor to enable the at least one processor to perform the blockchain-based data processing method according to any embodiment of the present disclosure.

According to still another aspect of the present disclosure, there is provided a non-transitory computer readable storage medium for storing computer instructions, wherein the computer instructions, when executed by a computer, cause the computer to implement the blockchain-based data processing method according to any embodiment of the present disclosure.

According to the technical solutions of the embodiment of the present disclosure, it solves the problem that the reliability of the processing result of the business smart contract in the blockchain cannot be ensured due to the centralization of the oracles for acquiring the off-chain data at present, realizes decentralized oracles, and ensures the authenticity of the off-chain data stored in the blockchain, thereby ensuring the reliability of the execution result of the business smart contract in the blockchain.

It should be understood that the content described in this section is intended neither to identify the key or important features of the embodiments of the present disclosure, nor to limit the scope of the present disclosure. Other features of the present disclosure will be easily understood from the following description.

### BRIEF DESCRIPTION OF THE DRAWINGS

The accompanying drawings are provided for better understanding of the solution, rather than limiting the present disclosure. In which,
FIG. 1 is a flowchart of a blockchain-based data processing method provided according to an embodiment of the present disclosure;
FIG. 2 is a flowchart of another blockchain-based data processing method provided according to an embodiment of the present disclosure;
FIG. 3 is a flowchart of still another blockchain-based data processing method provided according to an embodiment of the present disclosure;
FIG. 4 is a flowchart of still another blockchain-based data processing method provided according to an embodiment of the present disclosure;
FIG. 5 is a flowchart of still another blockchain-based data processing method provided according to an embodiment of the present disclosure;
FIG. 6 is a structural diagram of a blockchain-based data processing system provided according to an embodiment of the present disclosure; and
FIG. 7 is a block diagram of a blockchain-based data processing apparatus provided according to an embodiment of the present disclosure;
FIG. 8 is a block diagram of another blockchain-based data processing apparatus provided according to an embodiment of the present disclosure; and
FIG. 9 is a block diagram of an electronic device for implementing a blockchain-based data processing method according to an embodiment of the present disclosure.

### DETAILED DESCRIPTION OF THE EMBODIMENTS

Exemplary embodiments of the present disclosure are described below with reference to the accompanying drawings, including various details of the embodiments of the present disclosure to facilitate the understanding, and they should be considered as merely exemplary. Thus, it should be realized by those of ordinary skill in the art that various changes and modifications can be made to the embodiments described here without departing from the scope and spirit of the present disclosure. Also, for the sake of clarity and conciseness, the contents of well-known functions and structures are omitted in the following description.

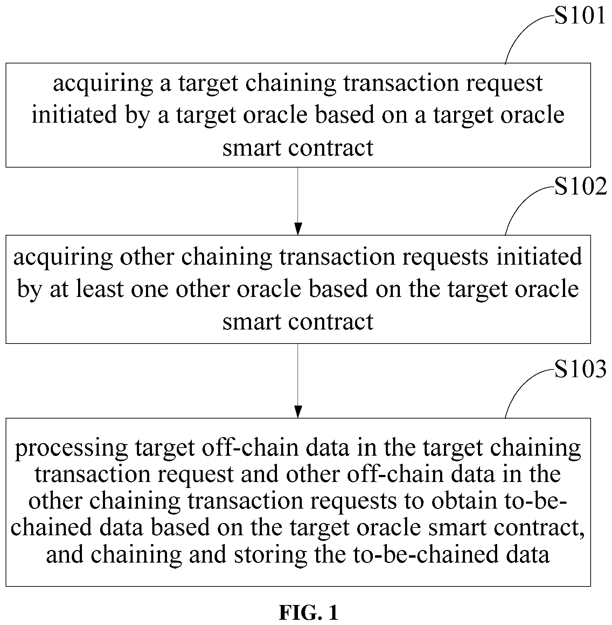

FIG. 1 is a flowchart of a blockchain-based data processing method provided according to an embodiment of the present disclosure. The embodiment of the present disclosure is applicable to ensure an authenticity of off-chain data transmitted by an oracle, so as to ensure a reliability of a processing result of a business smart contract on a blockchain and normal working of the business smart contract. The whole blockchain-based data processing method can be executed by a node in a blockchain network (specifically, a full node in the blockchain network) and an oracle in an oracle cluster in cooperation. The oracle cluster includes at least two oracles. As a bridge connecting an outside world (i.e., information outside the blockchain network) and the blockchain, the oracle may be a computer model, such as a computer program controlled by an organization or a user. Further, an electronic device carrying a function of the oracle may be a node in the blockchain network, or may not be a node in the blockchain network but capable of interacting with a blockchain node through an interface provided thereby and participating in the blockchain network. In this embodiment, each oracle may collect off-chain data, interact with the blockchain network, and transmit the collected off-chain data to the blockchain network.

The blockchain-based data processing method in this embodiment may be performed by a node in the blockchain network (specifically, a full node in the blockchain network). The method may be performed by a blockchain-based data processing apparatus, which may be implemented in software and/or hardware and may be integrated into a computing device bearing the blockchain nodes. As shown in FIG. 1, a blockchain-based data processing method provided in this embodiment may include:

S101: acquiring a target chaining transaction request initiated by a target oracle based on a target oracle smart contract.

In this embodiment, each oracle in an oracle cluster may collect off-chain data from an off-chain data source in a set collection period. Further, each oracle may collect one or more (i.e., two or more) data types of off-chain data, such as airplane delay data, result data of a football match, or weather data. The target oracle is any oracle in the oracle cluster.

The oracle smart contract refers to a code segment which is written based on a plugin mechanism and can be called and executed by nodes in a blockchain network. The execution of one oracle smart contract can realize at least one function or process one kind of transaction requests. Further, the oracle smart contract in this embodiment may be a system-level smart contract, which specifically may be pre-agreed when a blockchain is created and stored in a genesis block. Optionally, a plurality of oracle smart contracts may be deployed in the blockchain network, and each oracle smart contracts may process off-chain data of one data type. The target oracle smart contract refers to one of a plurality of candidate oracle smart contracts deployed in the blockchain network.

Optionally, the target oracle may collect target off-chain data from an off-chain data source in a set collection period, and may determine a data type of the target off-chain data. Next, the target oracle smart contract may be determined from the plurality of candidate oracle smart contracts according to the data type of the target off-chain data, then a target chaining transaction request including the target off-chain data may be generated by calling the target oracle smart contract by a blockchain node, and transmitted to a blockchain network.

Further, a local node may acquire the target chaining transaction request initiated by the target oracle based on the target oracle smart contract from the blockchain network.

S 102: acquiring other chaining transaction requests initiated by at least one other oracle based on the target oracle smart contract.

In this embodiment, other oracle(s) may be one or more oracles except the target oracle in the oracle cluster.

Optionally, being similar to the process that the target oracle initiates the target chaining transaction request to the blockchain network, other oracle may collect other off-chain data from the off-chain data source in a set collection period, and may determine a data type of the other off-chain data. Next, the target oracle smart contract may be determined from a plurality of candidate oracle smart contracts according to the data type of the other off-chain data, and the other chaining transaction request including the other off-chain data may be generated by calling the target oracle smart contract by a blockchain node, and transmitted to a blockchain network. The target off-chain data and the other off-chain data are of a same data type, and the other off-chain data and the other chaining transaction requests are of a same amount, which may be one or more.

Further, the local node may acquire the other chaining transaction requests initiated by the other oracles from the blockchain network, while acquiring the target chaining transaction request initiated by the target oracle.

In order to facilitate the distinction and facilitate the blockchain node to quickly identify the acquired chaining transaction requests, optionally, the chaining transaction requests initiated based on different oracle smart contracts may include different identifiers, where the identifier is unique, for example, it may be a serial number of the oracle smart contract.

S103: processing target off-chain data in the target chaining transaction request and other off-chain data in the other chaining transaction requests to obtain to-be-chained data based on the target oracle smart contract, and chaining and storing the to-be-chained data.

In this embodiment, the target off-chain data and the other off-chain data is of a same type, such as airplane delay data. Further, the target off-chain data and the other off-chain data includes same data items. Optionally, different types of off-chain data may be corresponding to different data items. For example, for the airplane delay data, the data items may include but are not limited to departure time, an airplane model, a departure place, a landing place, landing time, delay time, etc. For the result data of the football match, the data items may include but are not limited to team names of both parties of the match, a match place, match time, a match name, a match result score and a team name of a winning party.

Specifically, after acquiring the target chaining transaction request and the other chaining transaction requests, the local node may extract target chaining data and other chaining data from the target chaining transaction request and the other chaining transaction requests, respectively. Next, the target oracle smart contract may be called to process the target chaining data and the other chaining data to obtain to-be-chained data. Further, the to-be-chained data may be stored in the blockchain as transaction data.

Optionally, each oracle smart contracts may process the off-chain data of one data type, and different oracles may process the off-chain data in different ways. For example, in a case that the target off-chain data and the other off-chain data is the airplane delay data, processing the target off-chain data in the target chaining transaction request and the other off-chain data in the other chaining transaction requests to obtain to-be-chained data based on the target oracle smart contract may include: extracting the target off-chain data from the target chaining transaction request and the other off-chain data from the other chaining transaction requests, respectively, while acquiring confidence values of the target oracle and the other oracles; next, sorting the target off-chain data and the other off-chain data according to the confidence values (e.g., in a descending order), thereby taking off-chain data ranked first as the to-be-chained data. Further, in a case that there are a plurality of off-chain data ranked first, an average value of the plurality of off-chain data may be taken as the to-be-chained data. The confidence value of each oracle may be determined by a central node device according to the number of times that the oracle historically sent the chaining transaction requests and the number of times that the off-chain data in the chaining transaction request is taken as the to-be-chained data. In this embodiment, the central node device may be an authoritative server device.

In another example, in a case that the target off-chain data and the other off-chain data is weather data, processing the target off-chain data in the target chaining transaction request and the other off-chain data in the other chaining transaction requests to obtain to-be-chained data based on the target oracle smart contract may include: extracting the target off-chain data from the target chaining transaction request and the other off-chain data from the other chaining transaction requests, respectively; in a case that the target off-chain data and the other off-chain data includes off-chain data collected by a designated oracle, and an amount of the off-chain data collected by the designated oracle meets a set threshold or a set proportional value, taking the off-chain data collected by the designated oracle as the to-be-chained data. The designated oracle may be a relatively authoritative oracle recognized by the blockchain network.

It should be noted that in this embodiment, a plurality of oracles and oracle smart contracts are introduced, and the oracle smart contracts are adopted to process the off-chain data collected by the plurality of oracles, thereby realizing the decentralized oracles, ensuring the authenticity of the off-chain data stored in the blockchain, and laying a foundation for the business smart contracts to subsequently perform normal business processing based on the off-chain data stored in the blockchain and acquire reliable processing results. In addition, different oracle smart contracts are adopted to process off-chain data of different data types, which facilitates the management of different off-chain data, while increasing the flexibility of the solution, and extending use scenarios of the blockchain.

According to the technical solution of the embodiment of the present disclosure, a plurality of oracles and oracle smart contracts are introduced, and the oracle smart contracts are adopted to process off-chain data collected by the plurality of oracles, thereby solving the problem that the reliability of the processing result of the business smart contract in the blockchain cannot be ensured due to the centralization of the oracles for acquiring the off-chain data at present, realizing the decentralized oracles, and ensuring the authenticity of the off-chain data stored in the blockchain, which lays a foundation for the business smart contracts to subsequently perform normal business processing based on the off-chain data stored in the blockchain and obtain reliable processing results, while providing a new idea for the blockchain network to obtain off-chain data.

In order to ensure the security of the data in the blockchain, the chaining transaction request initiated by each oracle needs to carry a signature to indicate its identity. For example, each oracle may use a private key to sign the chaining transaction request initiated by itself to obtain a signature result, and add the signature result to the chaining transaction request. Or, each oracle may use a private key to sign the collected off-chain data to obtain a signature result, and add the signature result and the off-chain data to set fields of the oracle smart contract, respectively, thereby generating a chaining transaction request and sending it to the blockchain network.

Further, before processing the target off-chain data in the target chaining transaction request and the other off-chain data in the other chaining transaction requests based on the target oracle smart contract, the local node may acquire the signature result of the target oracle from the target chaining transaction request, and a signature result of the at least one other oracle from the other chaining transaction requests, respectively; acquire keys of the target oracle and the at least one other oracle from a blockchain network based on the target oracle smart contract; and use the acquired keys to perform verifications of the signature result of the target oracle and the signature result of the at least one other oracle.

For example, the signature result of the target oracle may be acquired by signing the target chaining transaction request with the private key of the target oracle; and the signature results of the other oracles may be acquired by signing the other chaining transaction requests with the private keys of the other oracles. Further, after acquiring the target chaining transaction request and the other chaining transaction requests, the local node may acquire the signature result of the target oracle from the target chaining transaction request and the signature results of the other oracles from the other chaining transaction requests, respectively; call the target oracle smart contract to acquire a public key of the target oracle and public keys of the other oracles from the blockchain network; next, perform a verification of the signature result of the target oracle with the public key of the target oracle, and perform a verification of the signature results of the other oracles with the public keys of the other oracles. Further, off-chain data collected by an oracle failed in the verification of the signature result (e.g., the target off-chain data collected by the target oracle) may be deleted locally; correspondingly, only off-chain data collected by an oracle succeeded in the verification of the signature result can be used to execute an operation process of S 103.

It can be understood that in this embodiment, the identity of the oracle is verified through the oracle smart contract, and only the off-chain data transmitted by the oracle succeeded in the verification of the signature result can be used for subsequent processing, thereby ensuring the security of the data in the blockchain network.

Further, while storing the to-be-chained data in the blockchain, the local node may also record the off-chain data collected by the target oracle and the signature result thereof, as well as the off-chain data collected by the other oracles and the signature results thereof based on the target oracle smart contract, in order for subsequent query and audit.

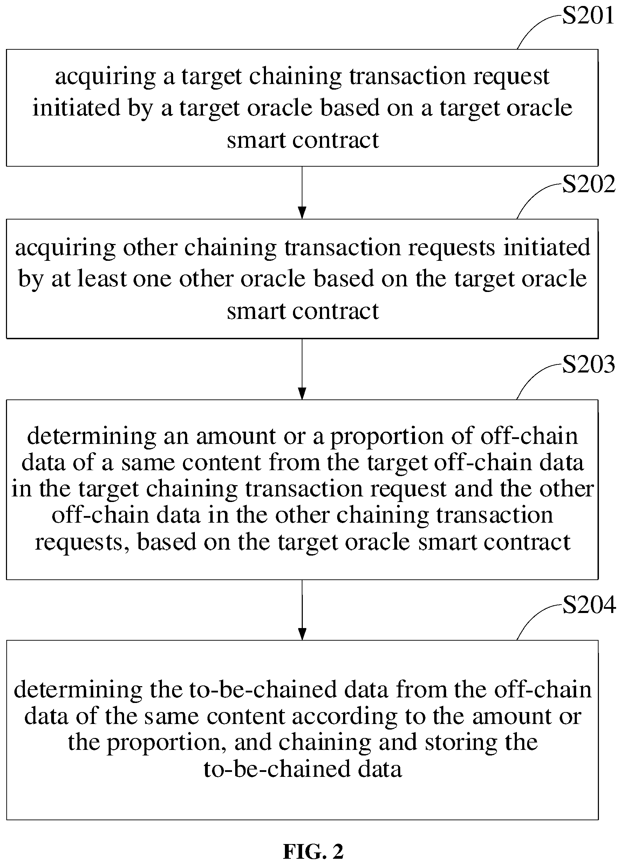

FIG. 2 is a flowchart of another blockchain-based data processing method provided according to an embodiment of the present disclosure. On the basis of the above embodiment, this embodiment provides an optional way for obtaining to-be-chained data according to target off-chain data and other off-chain data. As shown in FIG. 2, a blockchain-based data processing method provided in this embodiment may include:
S201: acquiring a target chaining transaction request initiated by a target oracle based on a target oracle smart contract.
S202: acquiring other chaining transaction requests initiated by at least one other oracle based on the target oracle smart contract.
S203: determining an amount or a proportion of off-chain data of a same content from the target off-chain data in the target chaining transaction request and the other off-chain data in the other chaining transaction requests, based on the target oracle smart contract.
   For any two pieces of off-chain data 1 and 2, in a case that each data item in the off-chain data 1 is the same as that in the off-chain data 2, then the off-chain data 1 and the off-chain data 2 are off-chain data of the same content. At this point, the amount of the off-chain data of the same content is 2.
S204: determining to-be-chained data from the off-chain data of the same content according to the amount or the proportion, and chaining and storing the to-be-chained data.

Optionally, the target off-chain data may be extracted from the target chaining transaction request and the other off-chain data may be extracted from the other chaining transaction requests, respectively. Next, in a case that the content of the target off-chain data is completely the same as that of each of the other off-chain data, the target off-chain data or any of the other off-chain data may be taken as the to-be-chained data. In a case that the content of the target off-chain data is the same as that of some of the other off-chain data, the amount or the proportion of the off-chain data of the same content (i.e., a proportion of the amount of the off-chain data of the same content to a total amount of all the off-chain data) may be counted. In a case that a counted amount is greater than a set amount threshold or a counted proportion is greater than a set proportion, the off-chain data of the same content may be taken as the to-be-chained data. For example, in a case that the amount of the other chaining transaction requests is nine, nine pieces of other off-chain data may be acquired. Assuming that there are 8 pieces of off-chain data of a same content among the target off-chain data and all other off-chain data, e.g., these 8 pieces of off-chain data is all X, and the amount of the off-chain data of the same content (e.g., 8) is greater than the set amount threshold (e.g., the set amount threshold is half, such as 5, of the total amount of all the acquired off-chain data of the same data type), then X may be taken as the to-be-chained data.

Further, in a case that the target off-chain data and all other off-chain data may be divided into at least two groups according to the contents of the off-chain data, a group with a largest amount of off-chain data may be selected as a target group. In a case that an amount of off-chain data included in the target group is greater than the set amount threshold or a proportion of off-chain data included in the target group is greater than the set proportion, any off-chain data in the target group may be taken as the to-be-chained data. For example, in a case that the amount of the other chaining transaction requests is nine, nine pieces of other off-chain data may be acquired. Assuming that the target off-chain data and all other off-chain data may be divided into two groups according to the contents of the off-chain data, where a first group includes three pieces of off-chain data of a same content, such as X, and a second group includes seven pieces of off-chain data of a same content, such as Y, then the second group may be taken as a target group. In a case that the amount (e.g., 7) of the off-chain data included in the target group is greater than the set amount threshold (e.g., the set amount threshold is half, such as 5, of the total amount of all the acquired off-chain data of the same data type), then Y may be taken as the to-be-chained data.

It should be noted that the optional way for determining the to-be-chained data provided in this embodiment may be applicable to the processing of the off-chain data through the target oracle smart contract, and may also be applicable to the processing of the off-chain data through other oracle smart contracts in the blockchain network.

According to the technical solution of the embodiment of the present disclosure, the off-chain data collected by a plurality of oracles are counted and analyzed based on the oracle smart contract, and the to-be-chained data is determined from the off-chain data collected by the plurality of oracles, which avoids the centralization of a single oracle, reduces the probability of fraud of the oracle, ensures the authenticity of the off-chain data stored in the blockchain, and provides an optional way for determining the to-be-chained data.

Further, processing the target off-chain data in the target chaining transaction request and the other off-chain data in the other chaining transaction requests to obtain to-be-chained data may further include: determining an average value of the target off-chain data and the other off-chain data, and taking the average value as the to-be-chained data.

Specifically, the target off-chain data may be extracted from the target chaining transaction request, and the other off-chain data may be extracted from the other chaining transaction requests, respectively. Next, an average value of the target off-chain data and all other off-chain data may be calculated and taken as the to-be-chained data. It can be understood that the optional way for determining the to-be-chained data provided in this embodiment may be applicable to a case where main data items included in the off-chain data are numeric. For example, in a case that the main data item in the airplane delay data is the delay time, the delay time in a plurality of off-link data may be averaged, and an average value is taken as a final delay time, so that the to-be-chained data includes the final delay time.

It can be understood that in this embodiment, the off-chain data collected by a plurality of oracles are counted and calculated, and an average value thereof is introduced to determine the to-be-chained data, thereby providing an optional way for determining the to-be-chained data.

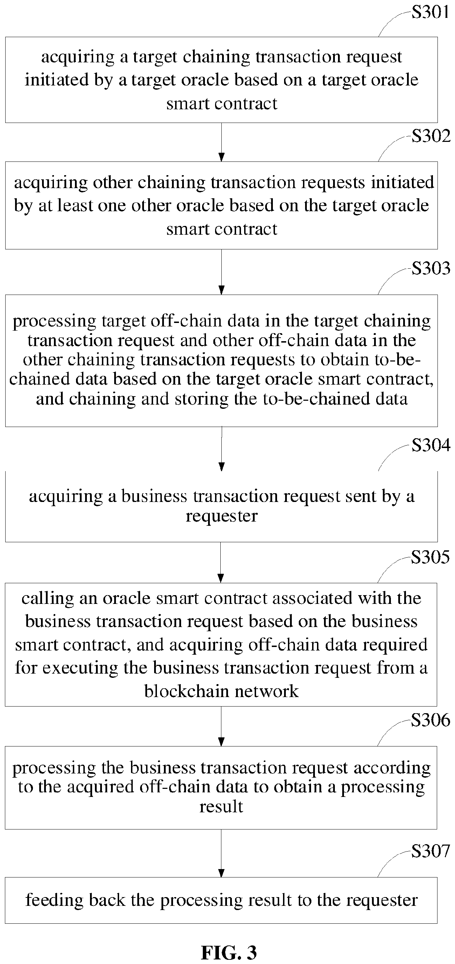

FIG. 3 is a flowchart of still another blockchain-based data processing method provided according to an embodiment of the present disclosure. On the basis of the above embodiment, this embodiment introduces a process of processing business transaction requests through a business smart contract. As shown in FIG. 3, a blockchain-based data processing method provided in this embodiment may include:
S301: acquiring a target chaining transaction request initiated by a target oracle based on a target oracle smart contract.
S302: acquiring other chaining transaction requests initiated by at least one other oracle based on the target oracle smart contract.
S303: processing target off-chain data in the target chaining transaction request and other off-chain data in the other chaining transaction requests to obtain to-be-chained data based on the target oracle smart contract, and chaining and storing the to-be-chained data.
S304: acquiring a business transaction request sent by a requester.

In this embodiment, the requester may be any party with a certain business processing requirement. Optionally, the requester may be a node in the blockchain network, or may not be a node in the blockchain network but capable of interacting with a blockchain node through an interface provided thereby and participating in the blockchain network.

For example, in a case that the requester is a node in the blockchain network, and the requester has a certain business processing requirement, a business transaction request may be generated based on the business smart contract according to the business processing requirement, and sent to the blockchain network. Further, a local node may acquire the business transaction request sent by the requester from the blockchain network.

In a case that the requester is not a node in the blockchain network, and the requester has a certain business processing requirement, the requester may interact with a node in the blockchain network, call a business smart contract, generate a business transaction request, and send the business transaction request to the blockchain network. Further, a local node may acquire the business transaction request sent by the requester.

S305: calling an oracle smart contract associated with the business transaction request based on the business smart contract, and acquiring off-chain data required for executing the business transaction request from a blockchain network.

In this embodiment, the business smart contract may also be a code segment which is written based on a plugin mechanism and can be called and executed by nodes in a blockchain network. The execution of one business smart contract can realize at least one business function. Further, the business smart contract in this embodiment may be pre-agreed when a blockchain is created and stored in a genesis block; or dynamically added in a creation process of the blockchain and stored in a certain block; or stored locally in the blockchain node independently of the blockchain. Optionally, a plurality of business smart contracts may be deployed in the blockchain network, and different business smart contracts may be corresponding to different functions. For example, insurance business smart contracts may be used to deal with insurance-related businesses; and gambling business smart contracts may be used to deal with gambling-related businesses.

Further, in a case where the requester has a certain business processing requirement (e.g., 'delay compensation for xx (number) airplanes within xx (time)'), a business smart contract related to the business processing requirement may be selected from a plurality of business smart contracts deployed in the blockchain network according to the business processing requirement, the business smart contract may be called to generate the business transaction request according to the business processing requirement, and the business transaction request is sent to the blockchain network.

Specifically, the local node may acquire the business transaction request sent by the requester, and may call the business smart contract related to the business transaction request to execute the business transaction request. Optionally, before or during the execution of the business transaction request based on the business smart contract, the local node may call the oracle smart contract associated with the business transaction request to obtain the off-chain data required for executing the business transaction request from a blockchain network.

Further, for the off-chain data of the same data type, the off-chain data of different periods may be stored in the blockchain, so that the local node can quickly locate the off-chain data required for executing the business transaction request, and the business transaction request may include the time of the off-chain data required for executing the business transaction request, such as the latest off-chain data or the off-chain data of specified time. Thus, the local node may call the oracle smart contract associated with the business transaction request, and acquire the off-chain data required for executing the business transaction request from a blockchain network according to the specified time in the business transaction request.

S306: processing the business transaction request according to the acquired off-chain data to obtain a processing result.

Specifically, after acquiring the off-chain data required for executing the business transaction request, the local node may process the business transaction request based on the business smart contract to obtain a processing result. Or, the local node may process the business transaction request based on the business smart contract to obtain a processing result.

S307: feeding back the processing result to the requester.

Specifically, the local node may feed back the processing result to the requester after acquiring the processing result. Further, in order to ensure the security of the processing result, the local node may encrypt the processing result with a key (e.g., a public key) of the requester and feed back the encrypted processing result to the requester, so that the requester can decrypt the encrypted processing result with a key (e.g., a private key) to obtain the processing result.

In addition, the local node may bind the processing result with the business transaction request and store them together in the blockchain for subsequent query.

According to the technical solution of the embodiment of the present disclosure, the off-chain data stored in the blockchain network may be acquired through the cooperative use of the business smart contract and the oracle smart contract. Next, the business transaction request may be processed based on the business smart contract according to the off-chain data to obtain the processing result. Due to the decentralized oracle of the present disclosure, the authenticity of the off-chain data stored in the blockchain is ensured, so that the business smart contract can perform normal business processing based on the off-chain data stored in the blockchain, and the reliability of the processing result is ensured.

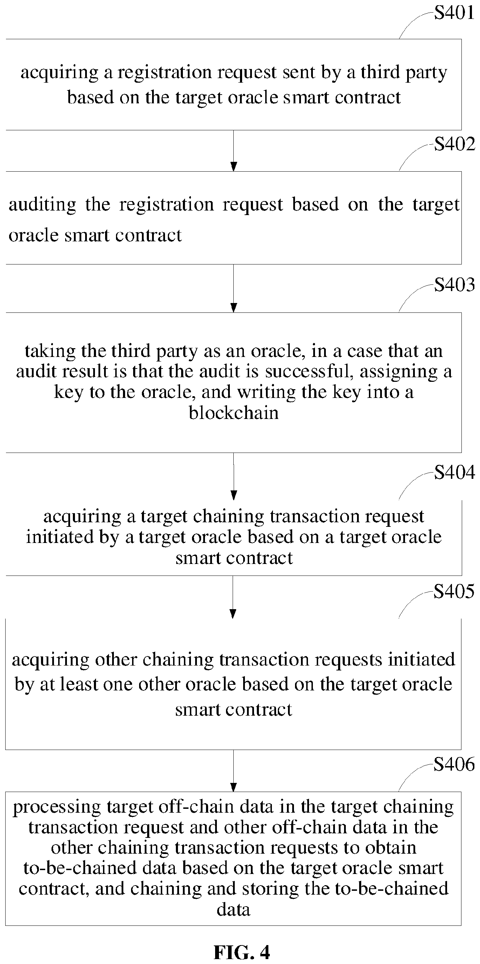

FIG. 4 is a flowchart of still another blockchain-based data processing method provided according to an embodiment of the present disclosure. On the basis of the above embodiment, a process that any third party becomes an oracle is added in this embodiment. As shown in FIG. 4, a blockchain-based data processing method provided in this embodiment may include:

S401: acquiring a registration request sent by a third party based on a target oracle smart contract.

In this embodiment, the third party may be any party that wants to serve as an oracle to release off-chain data to a blockchain network.

Specifically, in a case that any third party wants to be an oracle, it may determine a target oracle smart contract from a plurality of candidate oracle smart contracts according to a data type of the off-chain data to be released to the blockchain network, then call the target oracle smart contract through a blockchain node to generate a registration request, and send the registration request to the blockchain network. The registration request may also be called as an application request, which is sent when the third party applies to the blockchain network to become an oracle.

Further, the local node may acquire the registration request sent by the third party based on the target oracle smart contract.

S402: auditing the registration request based on the target oracle smart contract.

Specifically, after acquiring the registration request sent by the third party based on the target oracle smart contract, the local node may call the target oracle smart contract to audit the registration request. Optionally, by auditing the registration request in this embodiment, an authority of releasing the off-chain data to the blockchain network is limited, thereby ensuring the normal operation of the whole blockchain network.

For example, auditing the registration request may include: sending, by the local node, the registration request to a central node device for audit. In this embodiment, an authoritative central node device is introduced to ensure a reliability of an audit result.

Optionally, auditing the registration request may also be realized by the local node through a decentralized consensus mechanism in the blockchain. For example, the local node may send a voting request to a blockchain network to request other nodes in the blockchain network to vote on the registration request of the third party. Further, the local node may determine the audit result of the registration request according to a voting result. For example, in a case that the voting result is that the number of blockchain nodes allowing the third party to serve as an oracle is greater than half of a total number of nodes in the blockchain network, the audit result is that the audit is successful; otherwise, the audit result is that the audit is failed. In this embodiment, the registration request is audited based on the consensus mechanism in the blockchain, thereby ensuring the justice and equity of the audit result.

S403: taking the third party as an oracle in a case that an audit result is that the audit is successful, assigning a key to the oracle, and writing the key into a blockchain.

Specifically, the third party may be taken as an oracle in a case that the audit result is that the audit is successful, and a key pair (e.g., a public key and a private key) may be assigned to the oracle, the public key or a blockchain address may be stored in the blockchain, and may be further added to the target oracle smart contract.

S404: acquiring a target chaining transaction request initiated by a target oracle based on the target oracle smart contract.

S405: acquiring other chaining transaction requests initiated by at least one other oracle based on the target oracle smart contract.

S406: processing target off-chain data in the target chaining transaction request and other off-chain data in the other chaining transaction requests to obtain to-be-chained data based on the target oracle smart contract, and chaining and storing the to-be-chained data.

According to the technical solution of the embodiment of the present disclosure, the registration request sent by the third party is audited based on the target oracle smart contract, and the third party is taken as an oracle in a case that the audit result is that the audit is successful, which limits the authority of releasing the off-chain data to the blockchain network, thereby ensuring the normal operation of the whole blockchain network.

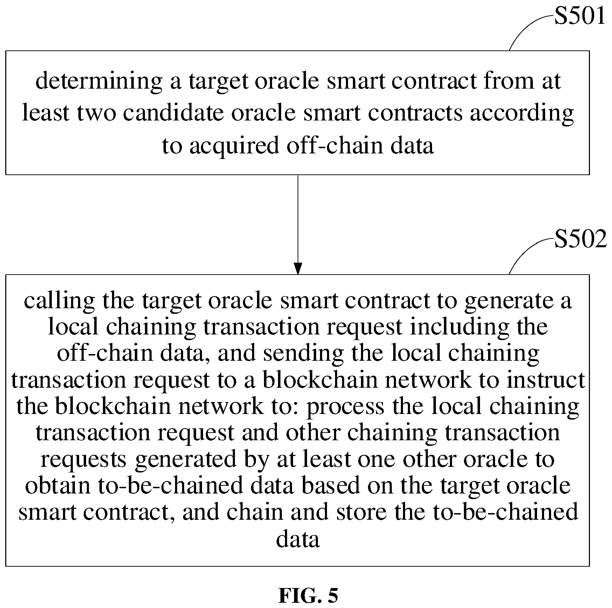

FIG. 5 is a flowchart of still another blockchain-based data processing method provided according to an embodiment of the present disclosure. The embodiment of the present disclosure is applicable to ensure an authenticity of off-chain data transmitted by an oracle, so as to ensure a reliability of a processing result of a business smart contract on a blockchain and normal working of the business smart contract. The whole blockchain-based data processing method can be executed by nodes in a blockchain network and an oracle in an oracle cluster in cooperation, where the oracle cluster includes at least two oracles. As a bridge connecting an outside world (i.e., information outside the blockchain network) and the blockchain, the oracle may be a computer model, such as a computer program controlled by an organization or a user. Further, an electronic device carrying a function of the oracle may be a node in the blockchain network, or may not be a node in the blockchain network but capable of interacting with a blockchain node through an interface provided thereby and participating in the blockchain network. In this embodiment, each oracle may collect off-chain data, interact with the blockchain network, and transmit the collected off-chain data to the blockchain network.

The blockchain-based data processing method in this embodiment may be performed by the oracle. The method may be performed by a blockchain-based data processing apparatus, which may be implemented in software and/or hardware and may be integrated into an electronic device bearing the blockchain nodes. As shown in FIG. 5, a blockchain-based data processing method provided in this embodiment may include:

S501: determining a target oracle smart contract from at least two candidate oracle smart contracts according to acquired off-chain data.

In this embodiment, a target oracle may collect off-chain data from an off-chain data source according to a set collection period, and may determine a type of the collected off-chain data; next, determine a target oracle smart contract from a plurality of candidate oracle smart contracts according to the data type of the off-chain data.

Optionally, in this embodiment, the target oracle acquires the off-chain data in at least one of the following ways: 1) acquiring the off-chain data of the off-chain data source by a manual input; 2) acquiring the off-chain data of the off-chain data source by machine grabbing; and 3) acquiring the off-chain data of the off-chain data source by an Application Program Interface (API).

S502: calling the target oracle smart contract to generate a local chaining transaction request including the off-chain data, and sending the local chaining transaction request to a blockchain network to instruct the blockchain network to: process the local chaining transaction request and other chaining transaction requests generated by at least one other oracle to obtain to-be-chained data based on the target oracle smart contract, and chain and store the to-be-chained data.

The off-chain data in the other chaining transaction requests and the acquired off-chain data are of a same data type.

Specifically, the target oracle may call the target oracle smart contract by the blockchain node to generate a local chaining transaction request including the off-chain data, and send the local chaining transaction request to the blockchain network to instruct the blockchain network to process the off-chain data in the local chaining transaction request and the other chaining transaction requests generated by other oracles to obtain to-be-chained data based on the target oracle smart contract, and chain and store the to-be-chained data.

In order to ensure the security of data in the blockchain, the chaining transaction request initiated by each oracle should carry a signature to indicate its identity. For example, generating a local chaining transaction request including the off-chain data may include: generating a local chaining transaction request including the off-chain data; signing the local chaining transaction request with a key (e.g., a private key) to obtain a signature result, and adding the signature result to the local chaining transaction request.

Or, generating a local chaining transaction request including the off-chain data may also include that: the target oracle may sign the collected off-chain data with a key (e.g. a private key) to obtain a signature result, and add the signature result and the off-chain data to the set fields of the target oracle smart contract, thereby generating a local chaining transaction request.

In this embodiment, by adding the signature result of the target oracle to the local chaining transaction request, it is convenient for the nodes in the blockchain network to perform an identity verification, which is a way to indirectly protect the data security in the blockchain.

According to the technical solution of the embodiment of the present disclosure, a plurality of oracles and oracle smart contracts are introduced, and the oracle smart contracts are adopted to process the off-chain data collected by the plurality of oracles, thereby solving the problem that the reliability of the processing result of the business smart contract in the blockchain cannot be ensured due to the centralization of the oracles for acquiring the off-chain data at present, realizing the decentralized oracles, and ensuring the authenticity of the off-chain data stored in the blockchain, which lays a foundation for the business smart contracts to subsequently perform normal business processing based on the off-chain data stored in the blockchain and obtain reliable processing results, while providing a new idea for the blockchain network to obtain the off-chain data.

Further, the target oracle may become an oracle in the following way before being taken as an oracle. Specifically, the target oracle smart contract is called, and a registration request is sent to the blockchain network to request the blockchain network to audit the registration request, and the key is assigned in a case that the audit is successful, so that the key assigned by the blockchain network is acquired. This embodiment provides an optional way for any third party to serve as an oracle.

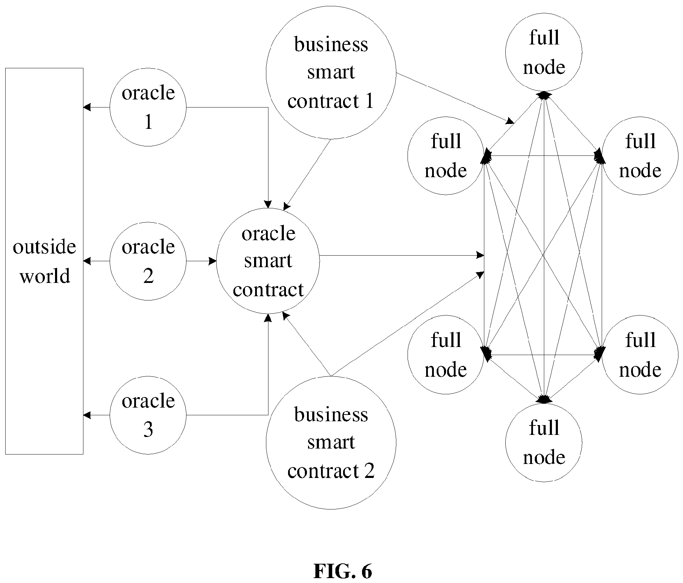

On the basis of the above embodiment, this embodiment provides a structural diagram of a blockchain-based data processing system, as shown in FIG. 6. A plurality of business smart contracts and a plurality of system-level oracle smart contracts may be deployed in a blockchain network, and each oracle smart contract may process off-chain data of one data type. An oracle cluster includes at least two oracles, such as an oracle 1, an oracle 2 and an oracle 3. Each oracle establishes a relationship with the outside world, and may collect data from an off-chain data source in a set collection period. Further, each oracle may collect one or more types of off-chain data.

After acquiring the off-chain data, each oracle may select a corresponding oracle smart contract from a plurality of candidate oracle smart contracts according to a data type of the acquired off-chain data, call the selected oracle smart contract to generate an chaining transaction request including the off-chain data, and send the chaining transaction request to the blockchain network.

A node in the blockchain network (specifically, a full node in the blockchain network) may acquire chaining transaction requests generated by a plurality of oracles based on a same oracle smart contract, and extract off-chain data from each of the chaining transaction requests; and process the extracted off-chain data based on the oracle smart contract to obtain to-be-chained data, and chain and store the to-be-chained data.

Next, when any requester has a certain business processing requirement, it may select a business smart contract related to the business processing requirement from a plurality of business smart contracts deployed in the blockchain network according to the business processing requirement, generate a business transaction request based on the business smart contract according to the business processing requirement, and send the business transaction request to the blockchain network. A node in the blockchain network may call an oracle smart contract associated with the business transaction request based on the business smart contract related to the business transaction request, acquire off-chain data required for executing the business transaction request from a blockchain network, process the business transaction request according to the acquired off-chain data to obtain a processing result, and chain and store the processing result. Further, the processing result may also be fed back to the requester.

According to the technical solution of the embodiment of the present disclosure, a plurality of oracles and oracle smart contracts are introduced, and the oracle smart contracts are adopted to process the off-chain data of the same data type collected by the plurality of oracles, thereby solving the problem that the reliability of the processing result of the business smart contract in the blockchain cannot be ensured due to the centralization of the oracles for acquiring the off-chain data at present, realizing the decentralized oracles, and ensuring the authenticity of the off-chain data stored in the blockchain, which lays a foundation for the business smart contracts to subsequently perform normal business processing based on the off-chain data stored in the blockchain and obtain reliable processing results, while providing a new idea for the blockchain network to obtain the off-chain data.

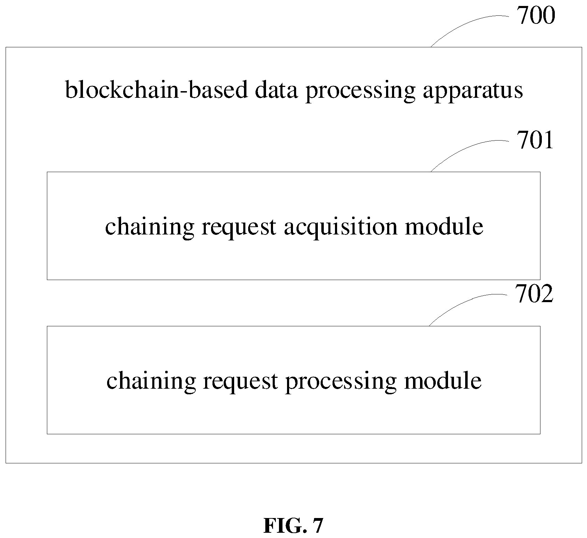

FIG. 7 is a block diagram of a blockchain-based data processing apparatus provided according to an embodiment of the present disclosure. The apparatus can implement the blockchain-based data processing method described in the embodiment of the present disclosure. The apparatus may be integrated in a computing device bearing blockchain nodes in a blockchain network. The blockchain-based data processing apparatus 700 specifically includes:
a chaining request acquisition module 701 configured to acquire a target chaining transaction request initiated by a target oracle based on a target oracle smart contract;
the chaining request acquisition module 701 is further configured to acquire other chaining transaction requests initiated by at least one other oracle based on the target oracle smart contract;
a chaining request processing module 702 configured to process target off-chain data in the target chaining transaction request and other off-chain data in the other chaining transaction requests to obtain to-be-chained data based on the target oracle smart contract, and chain and store the to-be-chained data.

According to the technical solution of the embodiment of the present disclosure, a plurality of oracles and oracle smart contracts are introduced, and the oracle smart contracts are adopted to process the off-chain data collected by the plurality of oracles, thereby solving the problem that the reliability of the processing result of the business smart contract in the blockchain cannot be ensured due to the centralization of the oracles for acquiring the off-chain data at present, realizing the decentralized oracles, and ensuring the authenticity of the off-chain data stored in the blockchain, which lays a foundation for the business smart contracts to subsequently perform normal business processing based on the off-chain data stored in the blockchain and obtain reliable processing results, while providing a new idea for the blockchain network to obtain the off-chain data.

For example, the chaining request processing module 702 is specifically configured to:
determine an amount or a proportion of off-chain data of a same content from the target off-chain data and the other off-chain data; and
determine the to-be-chained data from the off-chain data of the same content according to the amount or the proportion.

For example, the chaining request processing module 702 is further specifically configured to:
determine an average value of the target off-chain data and the other off-chain data, and take the average value as the to-be-chained data.

For example, the apparatus further includes:
a signature result acquisition module configured to acquire a signature result of the target oracle from the target chaining transaction request, and a signature result of the at least one other oracle from the other chaining transaction requests, respectively;
a key acquisition module configured to acquire keys of the target oracle and the at least one other oracle from a blockchain network based on the target oracle smart contract; and
a verification module configured to use the acquired keys to perform verifications of the signature result of the target oracle and the signature result of the at least one other oracle.

For example, the apparatus further includes:
a business request acquisition module configured to acquire a business transaction request sent by a requester;
a business request processing module configured to call an oracle smart contract associated with the business transaction request based on the business smart contract, and acquire off-chain data required for executing the business transaction request from a blockchain network;
the business request processing module is further configured to process the business transaction request according to the acquired off-chain data to obtain a processing result; and
a result feedback module configured to feed back the processing result to the requester.

For example, the apparatus further includes:
a registration request acquisition module configured to acquire a registration request sent by a third party based on the target oracle smart contract;
an audit module configured to audit the registration request based on the target oracle smart contract; and
a key writing module configured to take the third party as an oracle, in a case that an audit result is that the audit is successful, assign a key to the oracle, and write the key into a blockchain.

For example, the audit module is specifically configured to:
send a voting request to a blockchain network; and
determine the audit result of the registration request according to a voting result.

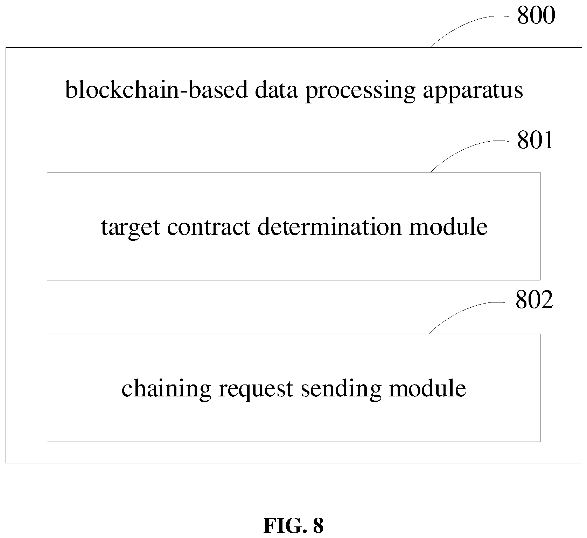

FIG. 8 is a block diagram of another blockchain-based data processing apparatus provided according to an embodiment of the present disclosure. The apparatus can implement the blockchain-based data processing method described in the embodiment of the present disclosure. The apparatus may be integrated in an electronic device bearing blockchain nodes in a blockchain network. The blockchain-based data processing apparatus 800 specifically includes:
a target contract determination module 801 configured to determine a target oracle smart contract from at least two candidate oracle smart contracts according to acquired off-chain data;
a chaining request sending module 802 configured to call the target oracle smart contract to generate a local chaining transaction request including the off-chain data, and send the local chaining transaction request to a blockchain network to instruct the blockchain network to: process the local chaining transaction request and other chaining transaction requests generated by at least one other oracle to obtain to-be-chained data based on the target oracle smart contract, and chain and store the to-be-chained data.

According to the technical solution of the embodiment of the present disclosure, a plurality of oracles and oracle smart contracts are introduced, and the oracle smart contracts are adopted to process the off-chain data collected by the plurality of oracles, thereby solving the problem that the reliability of the processing result of the business smart contract in the blockchain cannot be ensured due to the centralization of the oracles for acquiring the off-chain data at present, realizing the decentralized oracles, and ensuring the authenticity of the off-chain data stored in the blockchain, which lays a foundation for the business smart contracts to subsequently perform normal business processing based on the off-chain data stored in the blockchain and obtain reliable processing results, while providing a new idea for the blockchain network to obtain the off-chain data.

For example, the chaining request sending module 802 is specifically configured to:
generate a local chaining transaction request including the off-chain data; and
sign the local chaining transaction request with a key to obtain a signature result, and add the signature result to the local chaining transaction request.

For example, the apparatus further includes:
a registration request sending module configured to call the target oracle smart contract, and send the registration request to the blockchain network to request the blockchain network to audit the registration request, and assign a key in a case that an audit is successful; and
a key acquisition module configured to acquire the key assigned by the blockchain network.

According to the embodiments of the present disclosure, the present disclosure further provides an electronic device and a readable storage medium.

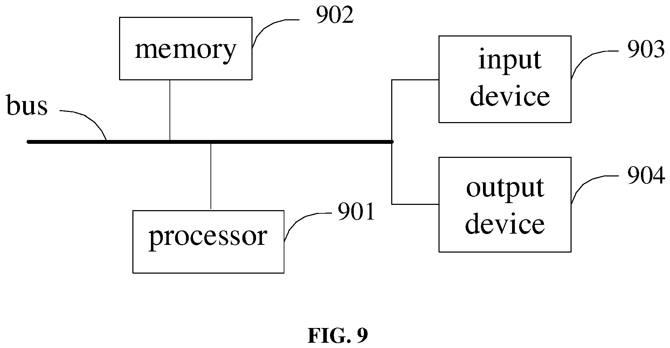

FIG. 9 is a block diagram of an electronic device for implementing a blockchain-based data processing method according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processor, a cellular phone, a smart phone, a wearable device and other similar computing devices. The components illustrated herein, connections and relationships therebetween, and functions thereof are merely examples, and are not intended to limit the implementation of the present disclosure described and/or claimed herein.

As shown in FIG. 9, the electronic device includes: one or more processors 901, a memory 902, and interfaces for connecting various components, including a high-speed interface and a low-speed interface. The various components are connected to each other by different buses, and may be mounted on a common mainboard or mounted in other ways as required. The processor may process instructions executed in the electronic device, including instructions stored in or on the memory to display Graphical User Interface (GUI) graphical information on an external input/output device (e.g., a display device coupled to an interface). In other embodiments, if necessary, a plurality of processors and/or a plurality of buses may be used together with a plurality of memories. Similarly, a plurality of electronic devices may be connected, each providing some necessary operations (e.g., acting as a server array, a group of blade servers, or a multi-processor system). In FIG. 9, one processor 901 is taken as an example.

The memory 902 is a non-transitory computer-readable storage medium provided by the present disclosure. The memory stores instructions executable by at least one processor, so that the at least one processor can perform the blockchain-based data processing method provided by the present disclosure. The non-transitory computer-readable storage medium of the present disclosure stores a computer instruction for enabling a computer to perform the blockchain-based data processing method provided by the present disclosure.

As a non-transitory computer readable storage medium, the memory 902 may be configured to store a non-transitory software program, a non-transitory computer executable program and modules, such as program instructions/modules corresponding to the blockchain-based data processing method in the embodiments of the present disclosure (e.g., the chaining request acquisition module 701 and the chaining request processing module 702 as shown in FIG. 7, or the target contract determination module 801 and the chaining request sending module 802 as shown in FIG. 8). The processor 901 executes various functional applications and data processing of the electronic device by running the non-transitory software programs, instructions and modules stored in the memory 902, thereby implementing the blockchain-based data processing method in the above method embodiments.

The memory 902 may include a program storage area and a data storage area, wherein the program storage area may store an operating system, and an application program required by at least one function; and the data storage area may store data created according to the use of the electronic device for implementing the blockchain-based data processing method. In addition, the memory 902 may include a high-speed random-access memory, and may also include a non-transitory memory, such as at least one magnetic disk memory device, a flash memory device, or any other non-transitory solid memory device. In some embodiments, the memory 902 optionally includes memories remotely located relative to the processor 901, and these remote memories may be connected to the electronic device for implementing the blockchain-based data processing method through a network. Examples of the network include, but are not limited to, the Internet, an intranet, a local area network, a blockchain network, a mobile communication network and combinations thereof.

The electronic device for implementing the blockchain-based data processing method may further include: input means 903 and output means 904. The processor 901, the memory 902, the input means 903, and the output means 904 may be connected by buses or in other ways, and the bus connection is taken as an example in FIG. 9.

The input means 903 may receive input digitals or character information, and generate a key signal input related to a user setting and a function control of the electronic device for implementing the blockchain-based data processing method. The input means 903 for example may be a touch screen, a keypad, a mouse, a track pad, a touch pad, an indicator stick, one or more mouse buttons, a trackball, a joystick, etc. The output means 904 may include a display device, an auxiliary lighting apparatus (e.g., a light-emitting diode (LED)), a haptic feedback apparatus (e.g., a vibration motor), etc. The display device may include, but is not limited to, a liquid crystal display (LCD), an LED display, and a plasma display. In some embodiments, the display device may be a touch screen.

Various embodiments of the system and technology described here may be implemented in a digital electronic circuit system, an integrated circuit system, an Application Specific Integrated Circuit (ASIC), computer hardware, firmware, software, and/or combinations thereof. These various embodiments may be implemented in one or more computer programs executable and/or interpretable on a programmable system including at least one programmable processor, and the programmable processor may be a dedicated or general programmable processor and capable of receiving and transmitting data and instructions from and to a storage system, at least one input means, and at least one output means.

These computing programs (also called as programs, software, software applications, or codes) include machine instructions of the programmable processor, and may be implemented with advanced processes and/or object-oriented programming languages, and/or assembly/machine languages. As used herein, the terms 'machine-readable medium' and 'computer-readable medium' refer to any computer program product, device, and/or apparatus (e. g., a magnetic disk, an optical disk, a memory and a programmable logic device (PLD)) for providing the machine instructions and/or the data to the programmable processor, including a machine-readable medium that receives machine instructions as machine-readable signals. The term 'machine readable signal' refers to any signal for providing the machine instructions and/or the data to the programmable processor.

In order to provide an interaction with a user, the system and the technology described here may be implemented on a computer having a display device (e. g., a cathode ray tube (CRT) or an LCD monitor) for displaying information to the user; and a keyboard and a pointing apparatus (e. g., a mouse or a trackball), through which the user can provide an input to the computer. Other kinds of apparatuses can also provide an interaction with the user. For example, a feedback provided to the user may be any form of sensory feedback (e.g., a visual feedback, an auditory feedback, or a tactile feedback); and an input from the user may be received in any form (including an acoustic input, a voice input or a tactile input).

The system and the technology described here may be embodied in a computing system including background components (e.g., acting as a data server), or a computing system including middleware components (e.g., an application server), or a computing system including front-end components (e.g., a user computer with a graphical user interface or a web browser, through which the user can interact with the embodiments of the system and technology described here), or a computing system including any combination of such background components, middleware components and front-end components. The components of the system may be connected to each other through a digital data communication in any form or medium (e.g., a communication network). Examples of the communication network include a local area network (LAN), a wide area network (WAN), the Internet and a blockchain network.

A computer system may include a client and a server. The client and the server are generally remote from each other and usually interact through a communication network. The relationship between the client and the server is generated by computer programs running on corresponding computers and having a client-server relationship with each other. The server may be a cloud server, also called as a cloud computing server or a cloud host, which is a host product in a cloud computing service system, to solve the defects of difficult management and weak business expansibility in the services of the traditional physical host and the virtual private server (VPS).

According to the technical solutions of the embodiment of the present disclosure, a plurality of oracles and oracle smart contracts are introduced, and the oracle smart contracts are adopted to process the off-chain data collected by the plurality of oracles, thereby solving the problem that the reliability of the processing result of the business smart contract in the blockchain cannot be ensured due to the centralization of the oracles for acquiring the off-chain data at present, realizing the decentralized oracles, and ensuring the authenticity of the off-chain data stored in the blockchain, which lays a foundation for the business smart contracts to subsequently perform normal business processing based on the off-chain data stored in the blockchain and obtain reliable processing results, while providing a new idea for the blockchain network to obtain the off-chain data.

It should be understood that the steps may be reordered, added or deleted using the various forms of flows as illustrated above. For example, the steps described in the present disclosure may be performed concurrently, sequentially or in a different order, so long as the desired result of the technical solution disclosed in the present disclosure can be achieved, which is not limited herein.

Those specific embodiments do not limit the protection scope of the present disclosure. It should be understood by those skilled in the art that various modifications, combinations, subcombinations and replacements can be made according to the design requirements and other factors. Any modification, equivalent replacement and improvement made under the spirit and principle of the present disclosure should fall within the protection scope of the present disclosure.

## Claims

1. A blockchain-based data processing method, comprising:
acquiring (S101) a target chaining transaction request initiated by a target oracle based on a target oracle smart contract;
acquiring (S102) other chaining transaction requests initiated by at least one other oracle based on the target oracle smart contract; and
processing (S103) target off-chain data in the target chaining transaction request and other off-chain data in the other chaining transaction requests to obtain to-be-chained data based on the target oracle smart contract, and chaining and storing the to-be-chained data.

2. The method according to claim 1, wherein processing (S 103) target off-chain data in the target chaining transaction request and other off-chain data in the other chaining transaction requests to obtain to-be-chained data, comprises:
determining (S203) an amount or a proportion of off-chain data of a same content from the target off-chain data and the other off-chain data; and
determining (S204) the to-be-chained data from the off-chain data of the same content according to the amount or the proportion.

3. The method according to claim 1 or 2, wherein processing (S103) target off-chain data in the target chaining transaction request and other off-chain data in the other chaining transaction requests to obtain to-be-chained data, comprises:
determining an average value of the target off-chain data and the other off-chain data, and taking the average value as the to-be-chained data.

4. The method according to claim 1, wherein before processing target off-chain data in the target chaining transaction request and other off-chain data in the other chaining transaction requests based on the target oracle smart contract, the method further comprises:
acquiring a signature result of the target oracle from the target chaining transaction request, and a signature result of the at least one other oracle from the other chaining transaction requests, respectively;
acquiring keys of the target oracle and the at least one other oracle from a blockchain network based on the target oracle smart contract; and
using the acquired keys to perform verifications of the signature result of the target oracle and the signature result of the at least one other oracle.

5. The method according to any one of claims 1 to 4, further comprising:
acquiring (S304) a business transaction request sent by a requester;
calling (S305) an oracle smart contract associated with the business transaction request based on the business smart contract, and acquiring off-chain data required for executing the business transaction request from a blockchain network;
processing (306) the business transaction request according to the acquired off-chain data to obtain a processing result; and
feeding back (307) the processing result to the requester.

6. The method according to any one of claims 1 to 5, further comprising:
acquiring (S401) a registration request sent by a third party based on the target oracle smart contract;
auditing (S402) the registration request based on the target oracle smart contract; and
taking (S403) the third party as an oracle, in a case that an audit result is that the audit is successful, assigning a key to the oracle, and writing the key into a blockchain.

7. The method according to claim 6, wherein auditing (S402) the registration request, comprises:
sending a voting request to a blockchain network; and
determining the audit result of the registration request according to a voting result.

8. A blockchain-based data processing method, comprising:
determining (S501) a target oracle smart contract from at least two candidate oracle smart contracts according to acquired off-chain data; and
calling (S502) the target oracle smart contract to generate a local chaining transaction request including the off-chain data, and sending the local chaining transaction request to a blockchain network to instruct the blockchain network to: process the local chaining transaction request and other chaining transaction requests generated by at least one other oracle to obtain to-be-chained data based on the target oracle smart contract, and chain and store the to-be-chained data.

9. The method according to claim 8, wherein generating the local chaining transaction request including the off-chain data, comprises:
generating a local chaining transaction request including the off-chain data;
signing the local chaining transaction request with a key to obtain a signature result, and adding the signature result to the local chaining transaction request.

10. The method according to claim 8, further comprising:
calling the target oracle smart contract, and sending a registration request to the blockchain network to request the blockchain network to audit the registration request, and assigning a key, in a case that an audit is successful; and
acquiring the key assigned by the blockchain network.

11. A blockchain-based data processing apparatus (700), comprising a plurality of modules configured to implement the blockchain-based data processing method according to any one of claims 1 to 7.

12. A blockchain-based data processing apparatus (800), comprising a plurality of modules configured to implement the blockchain-based data processing method according to any one of claims 8 to 10.

13. An electronic device, comprising:
at least one processor (901); and
a memory (902) communicatively connected to the at least one processor (901), wherein
the memory (902) stores instructions executable by the at least one processor (901), the instructions are executed by the at least one processor (901) to enable the at least one processor (901) to perform the blockchain-based data processing method according to any one of claims 1 to 7 or any one of claims 8 to 10.

14. A computer readable storage medium for storing computer instructions, wherein the computer instructions, when executed by a computer, cause the computer to perform the blockchain-based data processing method according to any one of claims 1 to 7 or any one of claims 8 to 10.

15. A computer program product comprising computer executable instructions stored thereon, wherein the executable instructions, when executed by a processor (901), cause the processor (901) to implement the blockchain-based data processing method according to any one of claims 1 to 7 or any one of claims 8 to 10.
